# EUROPEAN PATENT SPECIFICATION

(11) **EP 0 932 343 B1**
(45) Date of publication and mention of the grant of the patent: **12.10.2005**
(21) Application number: 97917175.8
(22) Date of filing: 22.04.1997
(51) Int. Cl.: A23G 1/00, A23G 1/22, A23G 1/20, A23G 3/28

(54) **Method of forming CHOCOLATE WITH RAISED DESIGN**
Verfahren zum Formen von SCHOKOLADE MIT SICHTBAREM DESIGN
Méthode pour former CHOCOLAT AVEC DESSIN SURELEVE

(30) Priority: 22.04.1996 AU PN943296
(43) Date of publication of application: 04.08.1999
(73) Proprietor: Chocolate Graphics Pty Ltd, Queensland 4220 (AU)
(72) Inventor: LUCAS, Nathaniel, Gordon, Hilary, Upper Coomera, QLD 4209 (AU); BRUCE, Michael, Richard, Bellevue Park, QLD 4215 (AU); ROBERTS, Lynn, Ray, Sorrento, QLD 4217 (AU)
(74) Representative: Evens, Paul Jonathan
(86) International application number: PCT/AU1997/000245
(87) International publication number: WO 1997/039636

(56) References cited:
- EP-A- 0 299 943
- EP-A- 0 498 357
- AU-A- 6 681 486
- FR-A- 2 681 510
- GB-A- 2 257 946
- US-A- 4 382 968
- US-A- 4 778 683
- US-A- 4 832 966
- US-A- 4 946 696
- PATENT ABSTRACTS OF JAPAN vol. 011, no. 206 (C-433), 3 July 1987 (1987-07-03) -& JP 62 029934 A (TOKYO FOOD KK), 7 February 1987 (1987-02-07)
- PATENT ABSTRACTS OF JAPAN vol. 011, no. 365 (C-460), 27 November 1987 (1987-11-27) -& JP 62 138140 A (AKUTAGAWA SEIKA KK), 20 June 1987 (1987-06-20)
- DERWENT ABSTRACT, Accession No. 83-729328/32, Class D13; & BE,A,896 332 (AKUTAGAWA CONFECTIO), 18 July 1983.
- PATENT ABSTRACTS OF JAPAN, Vol. 12, No. 410, C-540, page 85; & JP,A,63 148 933 (AKUTAGAWA SEIKA KK), 21 June 1988.

## Description

### BACKGROUND OF THE INVENTION

### 1. Field of the Invention

THIS INVENTION relates to an improved chocolate product and a method of producing same.

In particular, the invention relates to a method of producing a chocolate product having letters or other designs formed thereon of a different coloured chocolate or chocolate-like material than the rest of the chocolate product.

Throughout the specification, the term "chocolate material" is intended to include within its scope chocolate, chocolate-like material and chocolate substitute, eg., carob.

### 2. Prior Art

AU-B-66814/86 (583969) (GARRY JOHN GREEN) discloses a method of forming a chocolate product having a thin raised design thereon of a different colour than the rest of the chocolate product.

While the method disclosed in that specification enables a design formed in chocolate of one colour to be applied to chocolate of a second colour with a high degree of accuracy, the method, in practice, has a number of practical limitations.

In practice, the patterns or designs (eg., up to 36 in number) are engraved in a mould plate. Chocolate of a first colour is placed on the mould plate and spread over the plate, eg., with a plastic spatula, to fill the mould cavities and any excess chocolate is wiped off the exposed surface of the mould plate, eg., with tissue paper. A layer of the chocolate of the second colour is spread over the mould plate by hand, eg., using a spatula. The mould plate is shaken to remove any air bubbles; and is placed in a cooler, eg., for 10 minutes. When the chocolate is solid, the chocolate product is stripped from the mould plate and is then cut into squares using a knife guided by a template, which is placed over the exposed surface of the chocolate product bearing the design.

PAJ, vol.12, Nº410, C-540, p.85; & JP,A,63 148 933 (AKUTAGAWA SEIKA KK), 21 June 1988 discloses a process for obtaining a decorative chocolate of different color using a bottom mould and a top mould made of a polycarbonate resin. USA-4 778 683 and US-A-4 832 966 disclose laser engraving techniques.

The above method has the following practical problerns:
a) the actual thickness, and any variation in thickness, of the chocolate product formed from the second coloured chocolate is dependent solely on the operator's skill;
b) cutting of the chocolate products from the solid sheet of chocolate is labourious, as the template must be laid on the sheet to enable, eg., the horizontal cuts, toe be made and then rotated through 90 degrees to enable the vertical cuts to be made;
c) the location of the design on the chocolate products is variable, dependent on the placement of the cutting template on the chocolate sheet; and
d) the comers of the chocolate products are likely to crack and break as the products are cut from the sheet.

A rejection rate of 50% is not uncommon. While the chocolate may be melted and re-used, the operator's time cannot be recycled and so productivity is relatively low.

### SUMMARY OF THE INVENTION

It is an object of the present invention to provide an improved method which enables the defects of the above method to be overcome, or at least ameliorated.

It is a preferred object of the present invention to provide a method where the chocolate products can be readily formed into one or more pre-selected shapes.

It is a further preferred object of the present invention to provide a method which is not so dependent on the operator's skills.

Other preferred objects of the present invention will become apparent from the following description.

Method and apparatus aspects of the present invention are defined in independent claims 1 and 5 respectively. Various embodiments of the present invention are defined in dependent claims 2, 3 and 4.

Preferably, the plurality of identical patterns (eg 36 in number) are engraved in the first mould plate by computer assisted engraving.

Preferably, the first mould plate and the second mould plate are formed from resilient plastics material.

Preferably, one of the first and second colours is a white or cream colour, and the other colour is brown,

Preferably, the second mould plate is flexible.

Preferably, the mould cavity in the second mould plate has an inclined or bevelled side wall to enable a chocolate product to be easily stripped from the second mould plate.

In plan view, the mould cavities may be square, rectangular, elliptical, circular, heart-shaped, fan-shaped or any other regular or irregular shape.

### BRIEF DESCRIPTION OF THE DRAWINGS

To enable the invention to be fully understood, a preferred embodiment will now be described with reference to the accompanying drawings, in which: ,
FIG 1 is a perspective view of the computer-assisted laser-cut engraving of the first mould plate;
FIG 2 is a sectional side view of the first mould plate taken on line 2-2 on FIG 1;
FIGS 3 and 4 are respective sectional side views of the first chocolate colour being applied to the first mould plate;
FIG 5 is an isometric view showing the first and second mould plates in an exploded configuration;
FIG 6 is a sectional view taken on line 6-6 on FIG 5 showing the moulding of a chocolate product in accordance with the present invention; and
FIG 7 is a perspective view of the chocolate product on release from the mould plates.

### DETAILED DESCRIPTION OF THE PREFERRED EMBODIMENTS

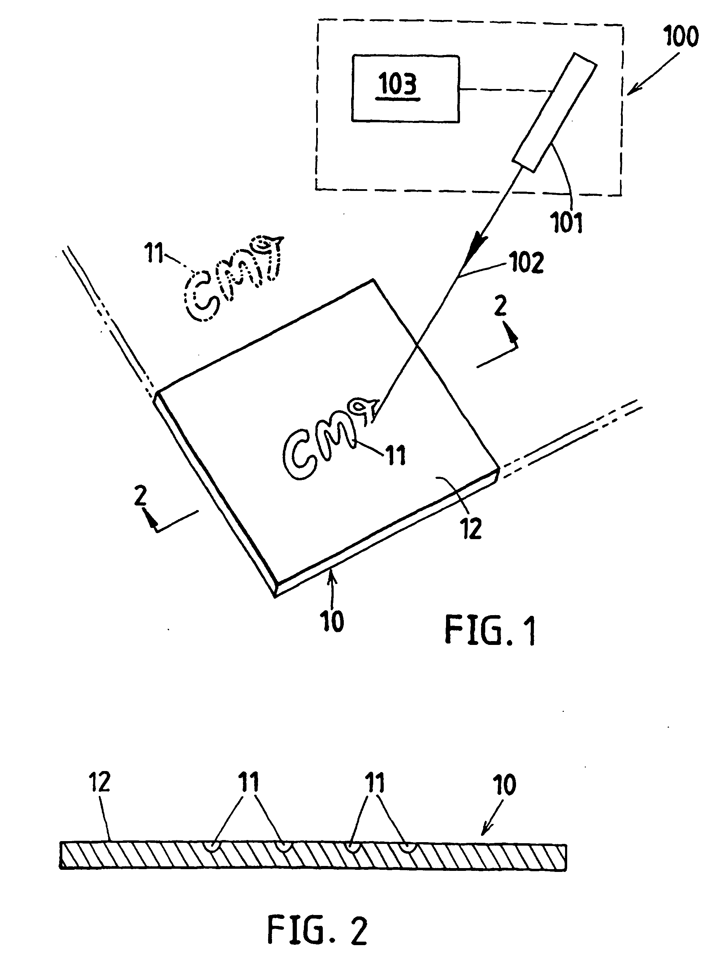

The first mould plate 10 has a design 11 engraved; eg., by a computer assisted engraving machine 100, in a regular array in the top surface 12 of the first mould plate 10 (see FIGS 1 and 2). The first mould plate 10 may be formed from engraving plastic laminate.

The engraving machine 100 has a laser unit 101, where the pattern cut by the laser beam 102 is controlled by a computer program in a computer 103.

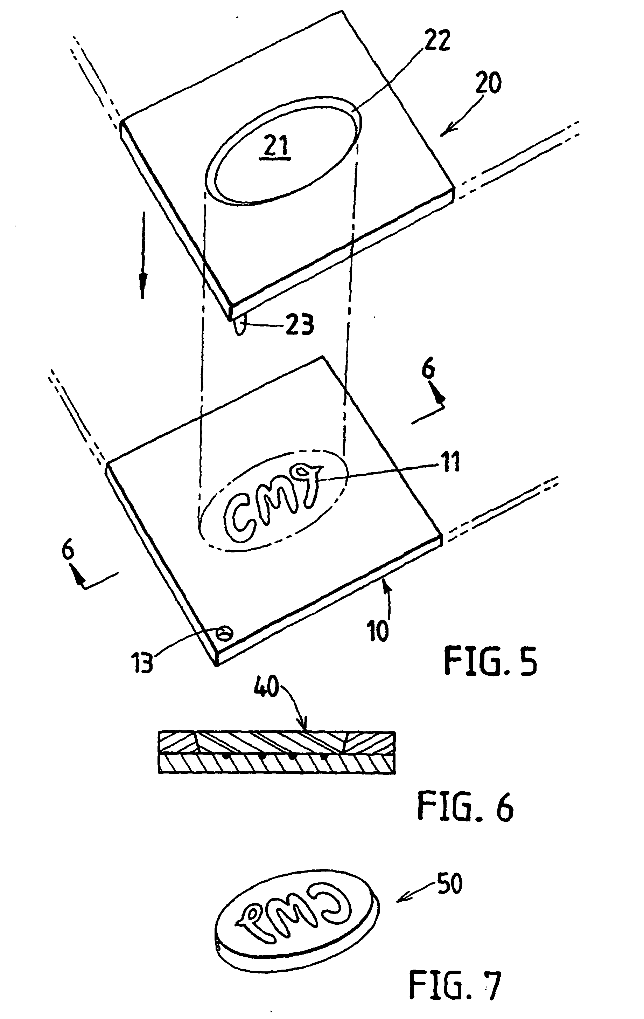

The second mould plate 20 (see FIG 5) is formed from a sheet of silicone rubber which may be, eg., 2, 3, 4 or 6mm thick - the thickness of this sheet will determine the thickness of the chocolate product. A suitable silicone rubber sheet is sold under the trade mark ELASTOSIL RTV by Wacker Chemicals under Product Code No. M4642. (In an alternative embodiment, the second mould plate 20 is formed from polyurethane or other inert plastics material.)

A mould cavity 21 extends through the second mould plate 20 and in this embodiment has a substantially elliptical shape with inclined side wall 22. It will be noted that when the second mould plate 20 is placed on the first mould plate 10, the mould cavity 21 is open to the engraved pattern 11.

Suitable spigot/hole combinations 22, 13 may be provided at the corners of the mould plates 10, 20, to ensure accurate register of the two plates together.

Alternatively, the physical characteristics of the plastics materials of the two mould plates 10, 20 may ensure that the mould plates have a non-slip contact when brought together.

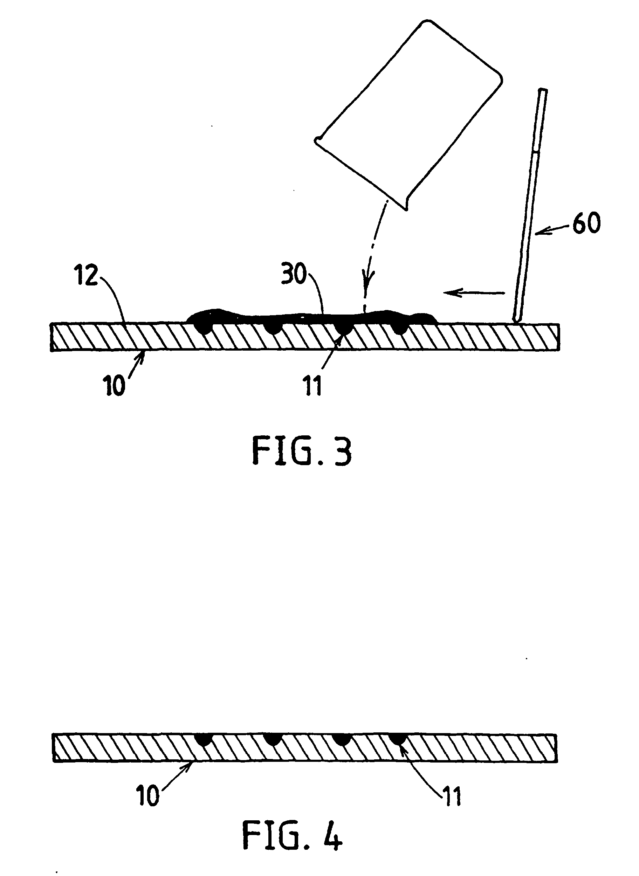

To produce the chocolate product 50, the chocolate of the first colour 30 is spread over the engraved design 11 in the top surface 12 of the first mould plate 10 by, e.g, a plastic spatula 60 and is forced into the engraved design 11 (see FIG 3).

Any excess chocolate is then wiped from the top surface 12 by the spatula 60 (see FIG 4).

The second mould plate 20 is then brought into register with the first mould plate 10 so that the chocolate of the first colour 30 is exposed to the mould cavity 21 (see FIG 5). Chocolate of the second colour 40 is then placed in the mould cavity 21 to fill the cavity and the mould plates 10, 20 may be tapped to release any trapped air bubbles.

Mould plates 10, 20 and the chocolate 30, 40 are placed in a cooler, eg., for 10 minutes, until the chocolate 30, 40 is solid. The second mould plate 20 is stripped from the first mould plate 10 and then the chocolate product 50 is released from the mould cavity 21.

By using the method of the present invention, the following advantages are achieved over the method disclosed in AU-B-66814/86:
(1) Different shapes of chocolate product 50 are easily produced, and the shapes are readily reproducible;
(2) The thickness of the chocolate of the second colour 40 is controlled by the thickness of the second mould plate 20, and the second mould plate 20 can be made from suitable plastic sheets in a range of thicknesses;
(3) The edges of the chocolate product 50 are accurately moulded and are less liable to damage;
(4) The design of the chocolate of the first colour 30 is more accurately located on the chocolate of a second colour 40 and the accuracy is more easily produced;
(5) As a cutting template is not placed on the top face of the chocolate product 50, there is less likelihood of the design on that face being damaged;
(6) The moulded edges on the chocolate product 50 ensure that there is no excess chocolate on the edges to be removed, and the chocolate product 50 can be bagged immediately;
(7) The level edges 22 of the mould cavity 21 ensure simple, clean release of the chocolate product from the second mould sheet 20;
(8) The resultant chocolate product 50 has an improved aesthetic appearance;
(9) A lower skill level is required for the operators to manufacture the chocolates; and
(10) Productivity is greatly improved.

## Claims

1. A method of forming a chocolate product comprising chocolate material selected from the group consisting of chocolate, chocolate-like material and chocolate substitute, the chocolate product having a thin raised design thereon of a different colour than the rest of the chocolate product, said method comprising the steps of:
engraving a plurality of identical patterns (11) in a first mould plate (10), each pattern being a mirror-image of the desired design on the product;
introducing into said engraved patterns (11). sufficient liquid chocolate material of a first colour to at least fill the engraved patterns (11);
removing any excess material of the first colour from the first mould plate (10);
placing a second mould plate (20) on the first mould plate (10), the second mould plate (20) comprising a plurality of mould cavities (21) of pre-selected shape therein, with the mould cavities (21) being in register with the engraved patterns (11) in the first mould plate (10) ;
introducing liquid chocolate material of a second colour into said mould cavities (21) to cover the chocolate material of the first colour;
cooling both chocolate materials in the mould plates (10,20) to solidify them and bond them together; and
removing the resultant chocolate product so formed from the mould plates (10,20);
**characterised by**:
forming the engraved patterns (11) in the first mould plate (10) by computer assisted laser engraving an engraving plastic laminate; and
forming the second mould plate (20) from silicon rubber or polyurethane, and placing the second mould plate (20) on the first mould plate (10) in a non-slip contact.

2. A method as claim in Claim 1, wherein:
one of the first and second colours is a white or cream colour, and the other colour is brown.

3. A method as claim in claim 1 or claim 2, wherein:
the mould cavities (21) in the second mould plate (20) have an inclined or bevelled aide wall to enable the chocolate product to be easily stripped from the second mould plate (20).

4. A method as claimed in any of the preceding claims, wherein:
in plan view, the mould cavities (21) are square, rectangular, elliptical, circular, heart-shaped, fan-shaped or any other regular or irregular shape.

5. An apparatus for the manufacture of a chocolate product having a thin raised design thereon of a different colour than the rest of the chocolate product, the apparatus including:
a first mould plate (10), formed from engraving plastic laminate, adapted to have a plurality of identical patterns (11) engraved on a top face (12) thereof, each pattern being a mirror-image of the design;
a computer-controlled laser engraving machine (100) operable to engrave the patterns (11) on the first mould plate (10) ; and
a second mould plate (20) formed from silicon rubber or polyurethane, and having a plurality of mould cavities (21) of pre-selected shape therein for regulation with the engraved patterns (11), so arranged that:
the engraving machine (100) engraves the patterns (11) on the top face (12) of the first mould plate (10) ;
the second mould plate (20) is placed in non-slip contact on the first mould plate (10) with the mould cavities (21) in register with the engraved patterns (11) after chocolate of the different colour has been placed in the engraved patterns (11); and
the first and second mould places (10,20) are separated when the chocolate of the rest of the chocolate product has been placed in the mould cavities (21) and the chocolate product has been cooled.

## Patentansprüche

1. Ein Verfahren zum Formen eines Schokoladenprodukts, das Schokoladenmaterial, ausgewählt aus der Gruppe bestehend aus Schokolade, schokoladenähnlichem Material und Schokoladenersatz, aufweist, wobei auf dem Schokoladenprodukt ein dünnes, erhabenes Design ausgebildet ist, das von anderer Farbe ist als das übrige Schokoladenprodukt, wobei das Verfahren folgende Schritte umfasst:
Eingravieren einer Mehrzahl identischer Muster (11) in eine erste Formplatte (10), wobei jedes Muster ein Spiegelbild des gewünschten Designs auf dem Produkt ist;
Einbringen von ausreichend flüssigem Schokoladenmaterfal einer ersten Farbe in die eingravierten Muster (11), um zumindest die eingravierten Muster (11) zu füllen;
Entfernen von überschüssigem Material der ersten Farbe von der ersten Formplatte (10);
Anordnen einer zweiten Formplatte (20) auf der ersten Formplatte (10), wobei in der zweiten Formplatte (20) eine Mehrzahl von Formaussparungen (21) mit vorab ausgewählter Form ausgebildet sind, wobei die Formaussparungen (21) genau auf die eingravierten Muster (11) in der ersten Formplatte (10) ausgerichtet sind;
Einbringen flüssigen Schokoladenmaterials einer zweiten Farbe in die Formaussparungen (21), um das Schokoladenmaterial der ersten Farbe zu bedecken;
Abkühlen beider Schokoladenmaterialien in den Formplatten (10, 20), um sie zu verfestigen und miteinander zu verbinden;
Entnehmen des resultierenden, so geformten Schokoladenprodukts aus den Formplatten (10, 20);
**gekennzeichnet durch**:
Formen der eingravierten Muster (11) in der ersten Formplatte (10) **durch** computerunterstütztes Lasergravieren eines gravurgeeigneten Kunststofflaminats; und
Formen der zweiten Formplatte (20) aus Silikongummi oder Polyurethan und Anordnen der zweiten Formplatte (20) auf der ersten Formplatte (10), so dass ein verrutschsicherer Kontakt besteht.

2. Ein Verfahren nach Anspruch 1, **dadurch gekennzeichnet, dass**:
die erste oder die zweite Farbe eine weiße oder cremefarbene Farbe ist und die andere Farbe Braun ist.

3. Ein Verfahren nach Anspruch 1 oder Anspruch 2, **dadurch gekennzeichnet, dass**:
die Formaussparungen (21) in der zweiten Formplatte (20) eine schräge oder abgeschrägte Seitenwand haben, damit das Schokoladenprodukt leicht aus der zweiten Formplatte (20) herausgelöst werden kann.

4. Ein Verfahren nach einem der vorangehenden Ansprüche, **dadurch gekennzeichnet, dass**:
die Formaussparungen (21) in der Draufsicht quadratisch, rechteckig, elliptisch, kreisförmig, herzförmig oder fächerförmig sind oder eine andere regelmäßige oder unregelmäßige Form haben.

5. Eine Vorrichtung zur Herstellung eines Schokoladenprodukts, auf dem ein dünnes, erhabenes Design ausgebildet ist, das von anderer Farbe ist als das übrige Schokoladenprodukt, wobei die Vorrichtung einschließt:
eine erste Formplatte (10) aus gravurgeeignetem Kunststofflaminat, die so angepasst ist, dass auf einer Oberseite (12) derselben eine Mehrzahl identischer Muster (11) eingraviert ist, wobei jedes Muster ein Spiegelbild des Designs ist;
eine computergesteuerte Lasergravurmaschine (100), die so bedienbar ist, dass sie die Muster (11) in die erste Formplatte (10) eingraviert; und
eine zweite Formplatte (20) aus Silikongummi oder Polyurethan, in der eine Mehrzahl von Formaussparungen (21) mit vorab ausgewählter Form zur Ausrichtung auf die eingravierten Muster (11) ausgebildet ist, so angeordnet dass:
die Gravurmaschine (100) die Muster (11) in die Oberseite (12) der ersten Formplatte (10) eingraviert;
die zweite Formplatte (20) verrutschsicher auf der ersten Formplatte (10) angeordnet wird, wobei die Formaussparungen (21) genau auf die eingravierten Muster (11) ausgerichtet sind, nachdem Schokolade der anderen Farbe in die eingravierten Muster (11) eingebracht wurde; und
die erste und die zweite Formplatte (10, 20) voneinander getrennt werden, nachdem die Schokolade des übrigen Schokoladenprodukts in die Formaussparungen (21) eingebracht und das Schokoladenprodukt abgekühlt wurde.

## Revendications

1. Méthode pour former un produit chocolaté comprenant une substance chocolatée choisie dans le groupe constitué par du chocolat, une substance analogue au chocolat et un substitut du chocolat, le produit chocolaté portant un mince dessin en relief d'une couleur différente du reste du produit chocolaté, ladite méthode comprenant les étapes consistant à :
graver une pluralité de motifs identiques (11) dans une première plaque de moulage (10), chaque motif étant une image inversée du dessin souhaité sur le produit ;
introduire dans lesdits motifs gravés (11) suffisamment de substance chocolatée liquide d'une première couleur pour au moins remplir les motifs gravés (11) ;
éliminer toute substance excédentaire de la première couleur de la première plaque de moulage (10) ;
placer une seconde plaque de moulage (20) sur la première plaque de moulage (10), la seconde plaque de moulage (20) comportant une pluralité de cavités de moulage (21) de forme présélectionnée, les cavités de moulage (21) coïncidant avec les motifs gravés (11) dans la première plage de moulage (10) ;
introduire une substance chocolatée liquide d'une seconde couleur dans lesdites cavités de moulage (21) pour recouvrir la substance chocolatée de la première couleur ;
refroidir les deux substances chocolatées dans les plaques de moulage (10, 20) pour les solidifier et les coller l'une à l'autre ; et
retirer le produit chocolaté résultant ainsi formé, des plaques de moulage (10, 20) ;
**caractérisée par** :
la formation des motifs gravés (11) dans la première plaque de moulage (10) par gravure laser assistée par ordinateur d'un stratifié plastique pour gravure ; et
la formation de la seconde plaque de moulage (20) à partir de caoutchouc silicone ou de polyuréthane, et le placement de la seconde plaque de moulage (20) sur la première plaque de moulage (10) selon un contact non glissant.

2. Méthode selon la revendication 1, dans laquelle :
une des première et seconde couleurs est une couleur blanche ou crème, et l'autre couleur est marron.

3. Méthode selon la revendication 1 ou la revendication 2, dans laquelle :
les cavités de moulage (21) dans la seconde plaque de moulage (20) ont une paroi latérale inclinée ou biseautée pour permettre au produit chocolaté d'être facilement détaché de la seconde plaque de moulage (20).

4. Méthode selon l'une quelconque des revendications précédentes, dans laquelle :
sur une vue en plan, les cavités de moulage (21) ont une forme carrée, rectangulaire, elliptique, circulaire, de coeur, d'éventail ou toute autre forme régulière ou irrégulière.

5. Appareil pour fabriquer un produit chocolaté comportant un mince dessin en relief d'une couleur différente du reste du produit chocolaté, l'appareil incluant :
une première plaque de moulage (10), formée à partir d'un stratifié plastique pour gravure, adaptée pour avoir une pluralité de motifs identiques (11) gravés sur une face supérieure (12) de celle-ci, chaque motif étant une image inversée du dessin ;
une machine de gravure laser commandée par ordinateur (100) pouvant fonctionner pour graver les motifs (11) sur la première plaque de moulage (10) ; et
une seconde plaque de moulage (20) formée à partir de caoutchouc silicone ou de polyuréthane, et comportant une pluralité de cavités de moulage (21) de forme présélectionnée pour un ajustement avec les motifs gravés (11), agencé de telle sorte que :
la machine de gravure (100) grave les motifs (11) sur la face supérieure (12) de la première plaque de moulage (10) ;
la seconde plaque de moulage (20) soit placée selon un contact non glissant sur la première plaque de moulage (10), les cavités de moulage (21) coïncidant avec les motifs gravés (11) après l'introduction de la substance chocolatée de la couleur différente dans les motifs gravés (11) ; et
les première et seconde plaques de moulage (10, 20) soient séparées lorsque la substance chocolatée du reste du produit chocolaté a été placé dans les cavités de moulage (21) et lorsque le produit chocolaté a été refroidi.
